# EUROPEAN PATENT SPECIFICATION

(11) **EP 0 854 295 B1**
(45) Date of publication and mention of the grant of the patent: **07.05.2003**
(21) Application number: 97115632.8
(22) Date of filing: 09.09.1997
(51) Int. Cl.: F04F 5/04, F04F 5/24, A01K 63/04, C02F 1/78, B01F 3/04

(54) **Sterilisation apparatus using ozone for raising water-zone**
Vorrichtung zur Sterilisation von Aufzuchtsgewässern mit Ozon
Dispositif pour la stérilisation des zones d'élévage aquatiques à l'aide d'ozone

(30) Priority: 21.01.1997 JP 2331197
(43) Date of publication of application: 22.07.1998
(73) Proprietor: Marine Techno Research, Inc., Nagasaki-shi, Nagasaki-ken 850-0026 (JP)
(72) Inventor: Yoshinaga, Katsutoshi, Nagasaki-shi, Nagasaki-ken (JP); Kasai, Hironao, Nagasaki-shi, Nagasaki-ken (JP)
(74) Representative: Henkel, Feiler, Hänzel

(56) References cited:
- US-A- 4 019 983
- US-A- 5 403 522
- US-A- 5 514 267
- US-A- 5 525 242
- PATENT ABSTRACTS OF JAPAN vol. 018, no. 183 (M-1584), 29 March 1994 -& JP 05 340400 A (MITSUBISHI HEAVY IND LTD;OTHERS: 01), 21 December 1993,
- PATENT ABSTRACTS OF JAPAN vol. 096, no. 012, 26 December 1996 -& JP 08 200300 A (MITSUBISHI HEAVY IND LTD), 6 August 1996,
- PATENT ABSTRACTS OF JAPAN vol. 018, no. 093 (C-1166), 16 February 1994 & JP 05 293479 A (HITACHI KIDEN KOGYO LTD), 9 November 1993,

## Description

### BACKGROUND OF THE INVENTION

### Field of the Invention

The present invention relates to an environment preservation measures technique for contamination resulting from the nourishment of an artificially closed water zone such as a bay inside, river mouth zone, lake/marsh, dam, reservoir, water-stored pond, or marine/inland raising bed. More particularly, the invention concerns a raising water-zone environment preservation apparatus which is directed to strengthening an epidemic prevention structure based on the sterilization of an entire closed water zone used as a raising bed by diffusing ozone over a wide range thereof in a short period of time and, before the sterilization effect vanishes, circulating ozone over a wide bottom layer of the water zone to thereby cause the effective spreading of the sterilization effect of the epidemic-causing fungi, virus or the like likely to stay in a part of the water zone interior, water bottom slush surface or coastal water zone.

For example, in lobster raising beds in sea water or fresh water, there have occurred accidents wherein a large number of lobsters are dying due to the infection of fish diseases resulting from epidemic-causing virus or the like. Actually, in lobster raising beds in Japan and the Southeast Asia, this kind of accidents occurs numerously and, after the occurrence of the death accidents, the use of such raising ponds is obliged to be abolished for the purpose of the prevention of epidemic calamities. Accordingly, in the raising bed districts such as the Southeast Asia where lobster culture has been popularly carried out, the actual circumstance is that a large number of ponds are left to stand as are in consequence of this abolishment, presenting serious social problems in terms of the environment of the water zones.

Under the above-mentioned circumstances, as the environment preservation countermeasures with respect to the contamination of the artificially closed water zones such as raising beds due to the nourishment thereof, there has hitherto been used an air exposure apparatus or ozone apparatus, whereby the sterilization and abatement of harmful bacteria are carried out.

However, in the conventional environment preservation countermeasures using an air exposure apparatus, gas is only diffused very locally by using mainly a jet flow of air having a locally high strength or by using a flow having a relatively aged energy such as that of an air diffuser.

Also, in the conventional environment preservation countermeasures using an ozone apparatus, ozone can be made to come into an in-water dissolved state but its in-water persistence time period is short. Ozone has a strong sterilization effect and therefore is effective for the decontamination and sterilization within the water zone. However, the state of O₃ is not stable and it is said that this O₃ can persist in water only for a time period of 20 to 30 minutes. Therefore, the effect thereof vanishes before the O₃ is sufficiently circulated through the water zone.

As mentioned above, in the conventional environment preservation countermeasures using an air exposure apparatus or ozone apparatus, it has been difficult to cause air exposure or sterilization effect to be sufficiently spread in an appreciably wide range of water zone.

When as mentioned above time lapses with air exposure or sterilization effect being kept unable to be sufficiently spread, the amount of exposing air or sterilizing ozone supplied becomes larger than required due to additional cause of the shortness of the in-water persistence time period, resulting in that useless consumption of ozone is liable to be forced.

In order to cause the sterilization effect of ozone to be sufficiently spread within the water zone, it is needed to cause a flow of water in the water zone in a range as wide as possible within a limited period of time so that the water zone may be sufficiently stirred. However, among the conventionally known ozone apparatus or air exposure apparatus, none of them had the positive flow-causing function of this kind.

JP 05 340400 A and JP 08 200300 A respectively disclose a raising water zone environment preservation apparatus with the features of the preamble portion of claim 1. These devices are air mixing type water flow generating devices which have a gas jet opening upstream of a water jet opening, both arranged in a cylindrical channel. The gas jet opening is in the form of a circular groove which is positioned very close to the jet opening for the water.

A purifying device for water which makes use of ozone generated in an ozonizer and mixed with air by utilizing negative pressure generated by rotation of a screw of an aerator is disclosed in JP 05 293479 A.

### SUMMARY OF THE INVENTION

The present invention has been made in view of the above-described problems so as to solve these problems and an object of the present invention is to provide a raising water-zone environment preservation apparatus which can strengthen an epidemic prevention structure based on the sterilization of an entire closed water zone used as a raising bed by diffusing ozone over a wide range thereof in a short period of time and, before the sterilization effect vanishes, circulating ozone over a wide bottom layer of the water zone to thereby cause the effective spreading of the sterilization effect of the epidemic-causing fungi, virus or the like likely to stay in a part of the water zone interior, water bottom slush surface or coastal water zone.

In order to attain the above object, the present invention is constituted by a raising water zone environment preservation apparatus as defined in claim 1.

Here, a floating body may be caused to float on a water surface of the closed water zone used as a raising bed, whereby the driving water pump and the ozone producer may be installed on the floating body.

As apparent from the foregoing description, according to the raising water zone environment preservation apparatus of the invention , there is brought about a very novel advantageous effect of making it possible to strengthen an epidemic prevention structure based on the sterilization of an entire closed water zone used as a raising bed by diffusing ozone over a wide range thereof in a short period of time and, before the sterilization effect vanishes, circulating ozone over a wide bottom layer of the water zone to thereby cause the effective wider spreading of the sterilization effect of the epidemic-causing fungi, virus or the like likely to stay in a part of the water zone interior, water bottom slush surface or coastal water zone.

Also, especially, according to the raising water zone environment preservation apparatus of the invention, in addition to the above-described advantageous effect, ozone supplied by way of the ozone supply pipe can be injected into and mixed with the water flowing through the interior of the cylindrical channel (within-vagina portion) of the water jet pump with a high speed while ozone is being helically rotated along the helicoid groove of the ozone jet helicoid groove and while ozone is being absorbed by a high-speed flow of the water in the cylindrical channel of the water jet pump.

Furthermore, in the above-described invention, in a case where a floating body is caused to float on a water surface of the closed water zone used as a raising bed and the driving water pump and ozone producer have been installed on the floating body, the driving water pump and ozone producer are not needed to be installed on a land. Therefore, the raising water zone environment preservation apparatus can be freely installed in a given closed water zone which is distant from a land.

### BRIEF DESCRIPTION OF THE DRAWINGS

Fig. 1 is a schematic side sectional view illustrating a first embodiment as a whole of the present invention;
Fig. 2 is a sectional view illustrating a water jet pump of an example serving to explain features of an embodiment of the present invention; and
Fig. 3 is a sectional view illustrating a water jet pump of an embodiment of the present invention.

### DETAILED DESCRIPTION OF THE PREFERRED EMBODIMENTS

The present invention will now be explained in more detail according to examples and embodiments thereof which are described in the appended drawings.

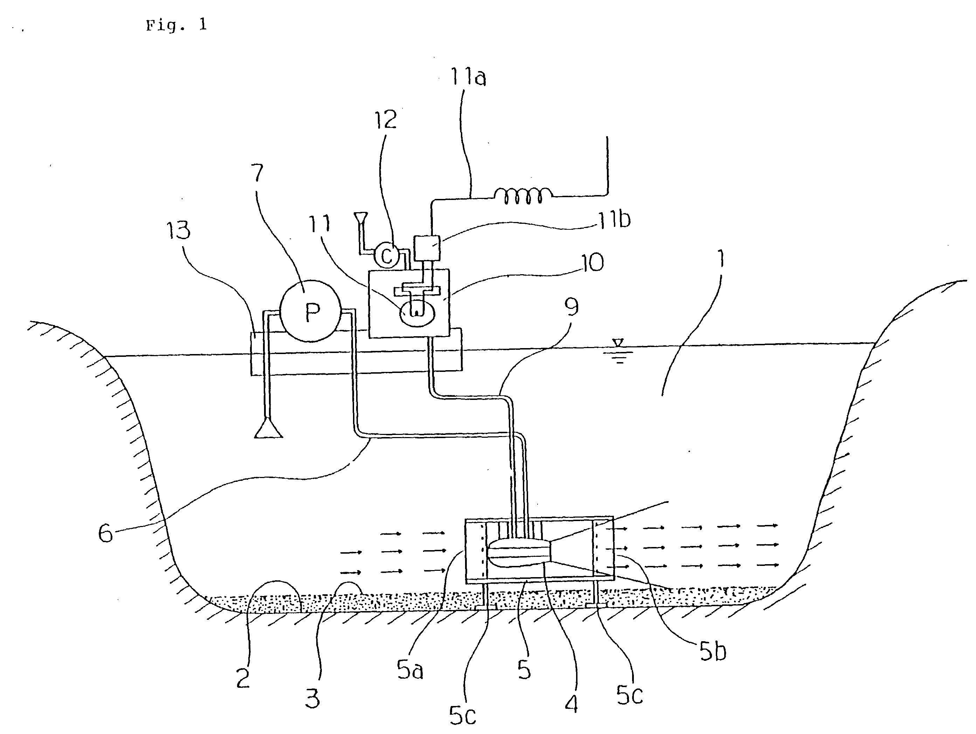

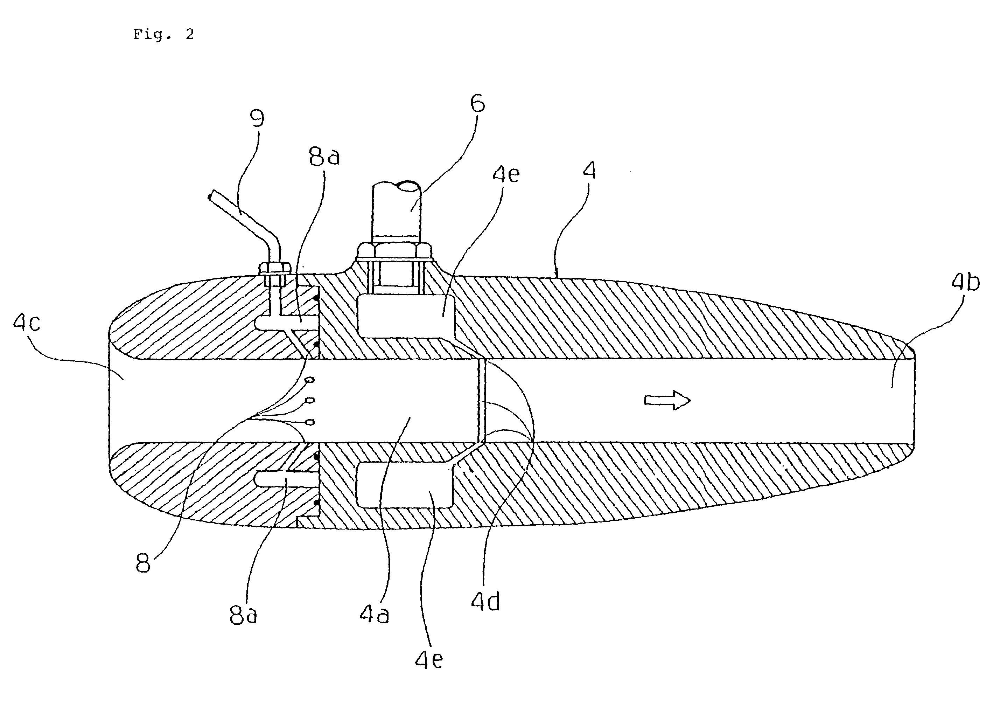

Here, Fig. 1 is a schematic side sectional view illustrating a first embodiment as a whole of the present invention and Fig. 2 is a sectional view illustrating a water jet pump according to an example for the purpose of explaining certain features of the invention.

In Figs. 1 and 2, on the bottom 2 of the water of a closed sea-water or fresh-water zone 1 used as a raising bed, bait for raising is deposited as a water bottom deposition 3. This water bottom deposition 3 contaminates the closed water zone 1 to become a cause of fish diseases. On this account, in order to prevent this contamination by circulating ozone on the bottom layer, on the water bottom 2 of the closed water zone 1 where the water bottom deposition 3 is deposited, there is installed a rectifying cylinder 5 interiorly provided with a water jet pump 4.

The rectifying cylinder 5 interiorly provided with the water jet pump 4 serves to strengthen an epidemic prevention structure based on the sterilization of the entire closed water zone 1 used as a raising bed by diffusing ozone over a wide range thereof in a short period of time and, before the sterilization effect vanishes, circulating ozone over a wide bottom layer of the closed water zone to thereby cause the effective spreading of the sterilization effect of the epidemic-causing fungi, virus or the like likely to stay in a part of the water zone interior, water bottom slush surface or coastal water zone.

The rectifying cylinder 5 functions to further improve the function of the water jet pump 4 interiorly provided therein. The rectifying cylinder 5 functions to stir the closed water zone 1 in a short period of time by preventing the water jetted from the water jet pump 4 from being dispersed immediately after this water is jetted and thereby causing it to be jetted straightforward to a further distant place and thereafter diffused in this distant place. While the rectifying cylinder 5 is installed on the water bottom 2 of the closed water zone 1 so that its open both ends may become substantially horizontally arranged, there may be also a case where the rectifying cylinder 5 is installed at a given angle of inclination if necessary.

The rectifying cylinder 5 consists of a circular cylindrical body and the both ends thereof are made open. One open end thereof is a water inlet 5a and the other open end thereof is a water outlet 5b. Under the rectifying cylinder 5, there are mounted support portions 5c for supporting the rectifying cylinder 5 by installing this rectifying cylinder 5 horizontally on the water bottom 2 side, respectively, at front and rear sides as viewed in the cylinder-axial direction.

Within the rectifying cylinder 5 there is disposed the water jet pump 4 which will be later described. The water jet pump 4 is mounted such that the axial direction thereof is in coincidence with the cylinder-axial direction of the rectifying cylinder 5. It is arranged that the jetting direction of the water jetted from the water jet pump 4 is the same as the cylinder-axial direction of the rectifying cylinder 5 and that the water having flown from one open end of the rectifying cylinder 5 is jetted and discharged from the other end thereof which is located on a side opposite to this one open end.

Within the water jet pump 4, there is formed a cylindrical channel referred to as "within-vagina portion" 4a serving as a flow passage and opened at its both ends. The within-vagina portion 4a is formed in the longitudinal direction of the water jet pump 4, i.e., the axial direction thereof. The within-vagina portion 4a is shaped like a circular cylinder and a downstream end of the circular-cylindrical within-vagina portion 4a has a water jet pump discharge port 4b. An upstream end of the within-vagina portion 4a has a water jet pump inflow port 4c.

In an inner wall surface of the flow passage of an intermediate portion of the within-vagina portion 4a, a jet opening 4d for jetting water is formed in the inner-circumferential direction. The jet opening 4d is formed over one entire circumference of the inner periphery of the within-vagina portion 4a. The jet opening 4d formed over one entire circumference is formed being directed slantwise toward the water jet pump discharge port 4b on the downstream side of the within-vagina portion 4a.

The water jetted from the jet opening 4d formed being directed slantwise toward the water jet pump discharge port 4b is jetted with a high speed toward the water jet pump discharge port 4b on the downstream end of the within-vagina portion 4a, with the result that a negative zone is developed on the downstream side from the jet opening 4d by this high-speed jet flow of the water. Thus, this jet flow functions to absorb and discharge ozone as later described.

Also, within the section of the water jet pump 4 which is located outside the within-vagina portion 4a there is formed an annular driving water chamber 4e communicated with the jet opening 4d. The driving water chamber 4e is a supply portion for supplying water which is to be jetted from the jet opening 4d and, on the downstream side therefrom, the jet opening 4d is formed such that this opening is communicated with the driving water chamber 4e.

To the driving water chamber 4e there is connected one end of a driving water supply pipe 6, the other end of which is connected to a driving water pump 7. The driving water pump 7 is an equipment which supplies water of the closed water zone 1 as a jet water to the water jet pump 4 by way of the driving water supply pipe 6 through circulation.

A plurality of ozone jet openings 8 for jetting ozone are formed in the inner wall surface of the flow passage located on the upstream side of the jet opening 4d of the within-vagina portion 4a circumferentially at equal intervals. The ozone jet openings 8 are formed being directed slantwise toward the water jet pump discharge port 4b located at the downstream end of the within-vagina portion 4a. The ozone jet openings 8 are so arranged as to absorb and discharge ozone injected by the water jetted from the jet opening 4d of the downstream side.

Also, within the section of the water jet pump 4 which is located outside the within-vagina portion 4a there is formed an annular ozone supply chamber 8a communicated with the ozone jet openings 8. The ozone supply chamber 8a is located on the upstream side of the driving water chamber 4e. The ozone supply chamber 8a is a supply portion for supplying ozone injected from the ozone jet openings 8 and, on the downstream side therefrom, the ozone jet openings 8 are formed such that these openings are communicated with the ozone jet chamber 8a.

To the ozone supply chamber 8a there is connected one end of an ozone supply pipe 9, the other end of which is connected to an ozone producer 10 installed in a floating body 13 as later described floating on the water surface. The ozone producer 10 is an equipment which supplies ozone produced therein to the water jet pump 4 by way of the ozone supply pipe 9.

The ozone producer 10 consists of an equipment for radiating, for example, ultraviolet rays with respect to oxygen in the air and converting this oxygen to ozone. Within a hollow vessel there is disposed a far ultraviolet ozone ray discharge tube 11 for radiating ultraviolet rays. A power source device 11b is provided for supplying power to the far ultraviolet ozone ray discharge tube 11 through a power source line 11a. An air compressor 12 for supplying air to the ozone producer 10 is provided outside this ozone producer 10 in a state of being connected thereto.

The floating body 13 is a structure which floats on the water surface of the closed water zone 1. On the floating body 13 there are installed the equipments such as the driving water pump 7 for supplying jet water to the water jet pump 4, ozone producer 10, air compressor 12, etc. so as to enable the water jet pump 4 to be used at a given position of the closed water zone 1. It is to be noted that the equipments such as the driving water pump 7, ozone producer 10, air compressor 12, etc. may be installed on a land as in the prior art.

Next, the operation based on the above-mentioned construction which is similar to the embodiment of the present invention will be explained hereunder.

For the purpose of operating the water jet pump 4 and ozone producer 10 constituting the raising water zone environment preservation apparatus, the driving pump 7 and air compressor 12 installed on the floating body 13 are driven.

When driving the driving water pump 7 installed on the floating body 13, the driving water pump 7 takes in water of the closed water zone 1, forces this water to be carried through the driving water supply pipe 6, and supplies this water to the water jet pump 4 inside the rectifying cylinder 5 installed on the bottom 2 of water.

Also, when driving the air compressor 12 installed on the floating body 13, the air compressor 12 absorbs and compresses air in the atmosphere and sends the resulting air into the ozone producer 10. The ozone producer 10 is provided with the far ultraviolet ozone ray discharge tube 11. The ozone producer 10 converts a part of oxygen in the air sent therein to ozone by the far ultraviolet ozone ray radiation to thereafter cause this ozone to flow downward through the ozone supply pipe 9 to the water jet pump 4 inside the rectifying cylinder 5 installed on the water bottom 2.

The water supplied to the water jet pump 4 through the driving water supply pipe 6 enters into the annular driving water chamber 4e formed inside the water jet pump 4. Then, the water is supplied from the driving water chamber 4e to the jet opening 4d located on the outlet side of the driving water chamber 4e. Then, the water is jetted from the jet opening 4d to the within-vagina portion 4a. The water having been jetted from the jet opening 4d to the within-vagina 4a is jetted with a high speed toward the water jet pump discharge port 4b side. The water jetted with a high speed is extruded from the jet opening 4d of the within-vagina portion 4a toward the water jet pump discharge port 4b with a high speed.

At this time, on the upstream side from the jet opening 4d of the within-vagina 4a, a negative zone is developed by the water jetted toward the water jet pump discharge port 4b side. By the development of this negative zone, an absorption force is produced. By this absorption force, water in the vicinity of the water bottom 2 of the closed water zone 1 flows from the water jet pump inflow port 4c of the within-vagina portion 4a into this within-vagina portion 4a.

The water which has flown in is caused to flow, by absorption, up to the position of the within-vagina portion 4a where the jet opening 4d is formed and thereafter is extruded with a high speed toward the water jet pump discharge port 4b side by the water which is jetted from the jet opening 4d toward the downstream side thereof.

On the other hand, the ozone having been supplied to the water jet pump 4 through the ozone supply pipe 9 enters into the annular ozone supply chamber 8a formed inside the water jet pump 4. This ozone is sent from the ozone supply chamber 8a to the ozone jet openings 8 located on the outlet side thereof and then is absorbed and jetted therefrom into the within-vagina portion 4a.

The area of the within-vagina portion 4a where the ozone jet openings 8 are formed falls within the negative zone due to the action of the water jetted from the jet opening 4d. By the absorption force produced due to this negative pressure, the ozone is absorbed and jetted from the ozone jet openings 8. The ozone absorbed and jetted from the ozone jet openings 8 to the within-vagina portion 4a is injected into and mixed with the water flowing through the within-vagina portion 4a toward the water jet pump discharge port 4b side with a high speed. As a result, the ozone comes into a state of very fine air bubbles and the resulting water becomes an ozone mixed water tending to be less floated. This resulting water is jetted from the water jet pump discharge port 4b of the water jet pump 4 with a high speed.

The ozone mixed water which has been jetted from the water jet pump discharge port 4b with a high speed passes through the cylindrical body of the rectifying cylinder 5 interiorly provided with the water jet pump 4 and is discharged to the external bottom layer side of the closed water zone 1 with a high speed.

At this time, by passing through the interior of the cylindrical body of the rectifying cylinder 5, the ozone mixed water which has been jetted from the water jet pump discharge port 4b with a high speed is prevented from being dispersed around the water jet pump 4 immediately after the jetting therefrom. Further, since the fine air bubbles tending to be less floated are jetted in the discharge direction substantially straightforwardly, the power with which the ozone mixed water is jetted is prevented from being decreased. That is, the ozone mixed water can be jetted up to a distant place with a high straightforwardness. As a result, the ozone mixed water can be sent out to a distant place on the bottom layer side of the closed water zone 1 in a short period of time.

In this way, it is possible to strengthen the epidemic prevention structure based on the sterilization of the entire closed water zone used as a raising bed by diffusing ozone over a wide range thereof in a short period of time and, before the sterilization effect vanishes, circulating ozone over a wide bottom layer of the water zone to thereby cause the effective spreading of the sterilization effect of the epidemic-causing fungi, virus or the like likely to stay in a part of the water zone interior, water bottom slush surface or coastal water zone.

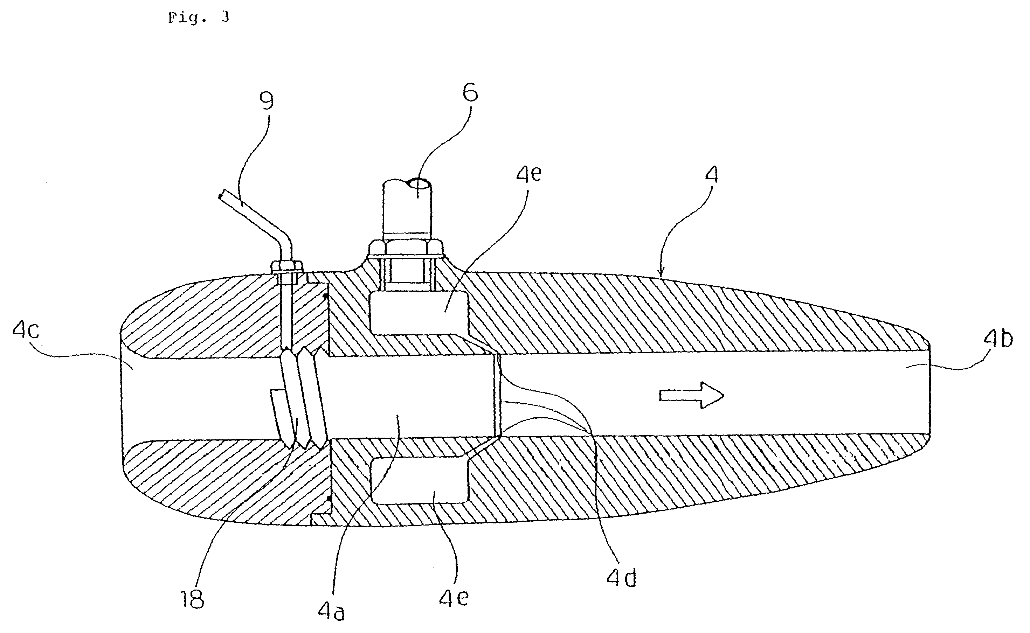

Next, an embodiment will be explained. Fig. 3 is a sectional view illustrating a water jet pump according to an embodiment of the present invention.

The difference of this embodiment from the above-described example lies in the construction of the portion formed in the within-vagina portion 4a of the water jet pump 4 and serving to jet ozone. Since the other construction is the same as the construction of the first embodiment, the same components are denoted by like reference symbols and an explanation thereof will be omitted. Also, since the function thereof also is the same as in the case of the example, an explanation thereof will be omitted.

In Fig. 3, in the inner wall surface of the flow passage located on the upstream side from the jet opening 4d of the within-vagina portion 4a there is helically formed circumferentially an ozone jet helicoid groove 18 for jetting ozone. A forward end side of the ozone supply pipe 9 is inserted into and connected to the upstream side of the helical ozone jet helicoid groove 18. The ozone supplied from the ozone supply pipe 9 is so arranged as to be injected into and mixed with the water flowing through the within-vagina portion 4a with a high speed while being helically rotated along the helicoid groove of the ozone jet helicoid groove 18.

## Claims

1. A raising water zone environment preservation apparatus, comprising:
a rectifying cylinder (5) to be installed in the water of a closed water zone (1) and interiorly provided with a water jet pump (4) and comprising a cylindrical body whose both ends are made open so as to improve the water jetting capability of the water jet pump (4);
wherein said water jet pump (4) has a cylindrical channel (4a) opened at its both ends and provided with a water jet pump inflow port (4c) and a water jet pump discharge port (4b) and formed in such a way as to pass through the interior of the water jet pump (4);
wherein a jet opening (4d) for jetting water toward the downstream side is formed in an inner wall surface of a flow passage of the cylindrical channel (4a); and
a driving water pump (7) for supplying water which is to be jetted from the jet opening (4d), the driving water pump (7) and the jet opening (4d) being connected to each other by a driving water supply pipe (6);
**characterized by** further comprising
an ozone jet helicoid groove (18) formed in the inner wall surface of the flow passage of the cylindrical channel (4a) which is located on the upstream side from the jet opening (4d), for jetting ozone such that it is absorbed by the water jetted from the jet opening (4d) and injected into and mixed with the water in the flow passage; and
an ozone producer (10) for producing ozone which is to be jetted from the ozone jet helicoid groove (18), the ozone producer (10) and the ozone jet helicoid groove (18) being connected to each other by an ozone supply pipe (9).

2. A raising water zone environment preservation apparatus as set forth in claim 1, comprising a floating body (13) adapted to float on a water surface of the closed water zone (1) used as a raising bed, wherein the driving water pump (7) and the ozone producer (10) are installed on the floating body (13).

## Patentansprüche

1. Aufzuchtgewässerzonen-Vorrichtung zur Erhaltung der Umwelt mit:
einem Rektifizierungszylinder (5), der im Wasser einer geschlossenen Wasserzone (1) zu installieren ist, im Innern mit einer Wasserstrahlpumpe (4) versehen ist und einen zylindrischen Körper umfasst, dessen beide Enden offen gestaltet sind, um so die Wasserstrahlfähigkeit der Wasserstrahlpumpe (4) zu verbessern,
wobei die Wasserstrahlpumpe (4) einen zylindrischen Kanal (4a) aufweist, der an seinen beiden Enden geöffnet ist und mit einer Wasserstrahlpumpen-Einströmöfffnung (4c) und einer Wasserstrahlpumpen-Ausströmöffnung (4b) versehen und derart ausgebildet ist, dass er durch das Innere der Wasserstrahlpumpe (4) verläuft,
wobei eine Strahlöffnung (4d) zum Ausstoßen von Wasser zur stromabwärtigen Seite in einer Innenwandfläche eines Strömungsdurchgangs des zylindrischen Kanals (4a) ausgebildet ist, und
einer Antriebswasserpumpe (7) zum Zuführen von Wasser, das von der Strahlöffnung (4d) auszustoßen ist, wobei die Antriebswasserpumpe (7) und die Strahlöffnung (4d) miteinander durch eine Antriebswasser-Zuführleitung (6) verbunden sind,
**dadurch gekennzeichnet, dass** sie ferner umfasst:
eine Ozonstrahl-Schrauben- bzw. -Spiralnut (18), die in der Innenwandfläche des Strömungsdurchgangs des zylindrischen Kanals (4a) ausgebildet ist, die an der stromaufwärtigen Seite von der Strahlöffnung (4d) gelegen ist, um Ozon auszustoßen, so dass dieses von dem von der Strahlöffnung (4d) ausgestoßenen Wasser absorbiert wird und in das Wasser im Strömungsdurchgang eingespritzt und mit diesem vermischt wird, und
einem Ozonerzeuger (10) zum Erzeugen von Ozon, das von der Ozonstrahl-Spiralnut (18) auszustoßen ist, wobei der Ozonerzeuger (10) und die Ozonstrahl-Spiralnut (18) durch eine Ozonzuführleitung (9) miteinander verbunden sind.

2. Aufzuchtgewässerzonen-Vorrichtung zur Erhaltung der Umwelt gemäß Anspruch 1, mit einem Schwimmkörper (13), der auf einer Wasseroberfläche der als Aufzuchtbett verwendeten geschlossenen Wasserzone (1) zu schwimmen vermag, wobei die Antriebswasserpümpe (7) und der Ozonerzeuger (10) an/auf dem Schwimmkörper (13) installiert sind.

## Revendications

1. Dispositif de préservation de l'environnement d'une zone d'élevage aquatique, comportant :
un cylindre de rectification (5) à installer dans l'eau d'une zone d'eau fermée (1) et muni intérieurement d'une pompe à jet d'eau (4) et comportant un corps cylindrique dont les deux extrémités sont ouvertes de manière à améliorer la capacité de projection d'eau de la pompe à jet d'eau (4) ;
dans lequel ladite pompe à jet d'eau (4) a un canal cylindrique (4a) ouvert à ses deux extrémités et muni d'un orifice d'entrée de pompe à jet d'eau (4c) et d'un orifice de refoulement de pompe à jet d'eau (4b) et formé de manière à passer à travers l'intérieur de la pompe à jet d'eau (4) ;
dans lequel une ouverture pour jet (4d) destinée à projeter de l'eau en direction du côté aval est formée dans une surface de paroi intérieure d'un passage d'écoulement du canal cylindrique (4a) ; et.
une pompe à eau d'entraînement (7) destinée à alimenter de l'eau qui doit être projetée à partir de l'ouverture pour jet (4d), la pompe à eau d'entraînement (7) et l'ouverture pour jet (4d) étant reliées l'une à l'autre par un tuyau d'alimentation en eau d'entraînement (6) ;
**caractérisé en ce qu'**il comporte de plus
une gorge hélicoïdale de projection d'ozone (18) formée, dans la surface de paroi intérieure du pas sage d'écoulement du canal cylindrique (4a) qui est située sur le côté amont à partir de l'ouverture pour jet (4d), pour projeter de l'ozone de telle sorte qu'il soit absorbé par l'eau projetée à partir de l'ouverture pour jet (4d) et injecté dans l'eau et mélangé à celle-ci dans le passage d'écoulement ; et
un producteur d'ozone (10) pour produire de l'ozone qui doit être projeté à partir de la gorge hélicoïdale de projection d'ozone (18), le producteur d'ozone (10) et la gorge hélicoïdale de projection d'ozone (18) étant reliés l'un à l'autre par un tuyau d'alimentation en ozone (9).

2. Dispositif de préservation de l'environnement d'une zone d'élevage aquatique selon la revendication 1, comportant un corps flottant (13) adapté pour flotter à la surface de l'eau de la zone d'eau fermée (1) utilisée en tant que lit d'élevage, dans lequel la pompe à eau d'entraînement (7) et le producteur d'ozone (10) sont installés sur le corps flottant (13)
